# EUROPEAN PATENT SPECIFICATION

(11) **EP 2 485 467 B1**
(45) Date of publication and mention of the grant of the patent: **12.04.2017**
(21) Application number: 11290069.1
(22) Date of filing: 31.01.2011
(51) Int. Cl.: H04M 3/487

(54) **Method and system for sharing music via cell phones**
Verfahren und System zum Musik-Sharing über Mobiltelefone
Procédé et système pour partager de la musique via des téléphones cellulaires

(43) Date of publication of application: 08.08.2012
(73) Proprietor: ALCATEL LUCENT, 92100 Boulogne-Billancourt (FR)
(72) Inventor: Ertan, Emre Mehmet, Istanbul (TR)
(74) Representative: Wetzel, Emmanuelle

(56) References cited:
- EP-A1- 1 811 757
- WO-A1-2008/023855

## Description

The present system relates to telecommunication networks. In particular, the present document relates to value added services provided on telecommunication networks, such as wireless networks, GSM or UMTS networks.

A widely used value added service in wireless telecommunication networks is the Ring back Tone (RBT) service. In the RBT service, a user A first chooses a song. When other users call user A they listen to that song, until user A picks up the phone (instead of listening to the dial tone). This service has several drawbacks. First of all every user calling user A listens to the same song selected by user A. This might be inappropriate, depending on the person calling user A (e.g. family members or friends, on one hand, and professional collaborators, on the other hand).

Furthermore, the song selected by user A is preset in the network and the preset song will continue to play regardless the current state of mind or mood of user A. In other words, the song selected for the RBT service may not correspond to user A's mood anymore, thereby falling short of the aim of the RBT service which is to express the feelings and thoughts of a called party through an appropriately selected RBT, i.e. an appropriately selected piece of music.

Overall, it may be stated that the RBT service does not allow the user of a telephone to control the type of audio signal (e.g. the piece of music) which is played to a second party and/or to have an influence on the second party that is listening to the audio signal at any given point of time. Furthermore, within the RBT service, a song is only played during the ringing phase of the telephone connection, i.e. until the moment that user A picks up the phone. As such, the user has no control over the time duration during which the selected audio signal is being played to the second party.

WO2008/023855A1 describes a system and method for providing background music service. EP1811757A1 describes a method for adding background sound to mobile communication talking.

The present document addresses the above mentioned shortcomings of the RBT service and describes a method and system for providing an improved value added service to users of a telecommunication network, e.g. a GSM or UMTS network.

According to an aspect a media server for a telecommunication network is described. The telecommunication network may be a GSM or UMTS network and the media server may be interconnected to the network via a gateway node using protocols such as CAMEL (Customized Application for Mobile Network Enhanced Logic) signaling. The media server may be configured to or adapted to provide a predetermined audio signal, e.g. a music signal. The predetermined audio signal may be used for generating a background signal within a communication channel between a first and a second user equipment within the network. As such, the predetermined audio signal may be inserted into the communication channel between the first user equipment and the second user equipment in addition to audio data (e.g. a telephone conversation) exchanged between the first and second user equipment.

The media server may be configured to set up a second communication channel to the second user equipment (e.g. a wireless telephone or a smart phone). The second communication channel may be a VoIP packet connection or a switched circuit connection between the media server and the second user equipment. Upon confirmation from the second user equipment of the successful setup of the second communication channel, the media server may be configured to set up a first communication to the first user equipment (e.g. a wireless telephone or a smart phone). The first communication channel may be a VoIP packet connection or a switched circuit connection between the media server and the second user equipment.

Subsequently, the media server may be configured to link the first and second communication channel to provide a communication channel between the first user equipment and the second user equipment. As such, a three party connection between the first user equipment, the media server and the second user equipment may be established. The media server may be configured to insert the predetermined audio signal into this communication channel between the first user equipment and the second user equipment. As such, the audio signal may be transmitted to the first and the second user equipment.

The media server may be configured to receive a request for setting up the communication channel to the second user equipment from the first user equipment prior to setting up the second communication channel. The request may be a call set up request comprising an indication of the network address (e.g. a telephone number) of the second user equipment.

The media server may be configured to detect that the first user equipment has requested the insertion of the predetermined audio signal into the communication channel between the first user equipment and the second user equipment. The detecting may comprise sending a request to a home location register of the first user equipment. Furthermore, the detecting may comprise receiving a response indicating that the first user equipment has requested the insertion of the predetermined audio signal.

The media server may be configured to receive a control signal from the first user equipment and/or the second user equipment, wherein the control signal is typically directed at controlling the rendering of the audio signal to the first and/or second user equipment. The control signal may be an inband signal of the communication channel, e.g. a DTMF (dual-tone multi frequency) signal transmitted from the first and/or second user equipment to the media server. Furthermore, the media server may be configured to modify the rendering of the audio signal to the first and/or second user equipment in accordance to the control signal. The modifying of the rendering of the audio signal may comprise one or more of: modifying a playback volume of the audio signal, pausing a playback of the audio signal, stopping a playback of the audio signal, resuming a playback of the audio signal, muting a playback of the audio signal. It should be noted that the media server may be configured to modify the rendering of the audio signal independently for the first and the second user equipment. As such, the rendering of the audio signal may be different for the first and the second user equipment. In particular, independent control signals may be received from the first and second user equipment, thereby controlling the rendering for the first and second user equipment, respectively.

According to another aspect, a method for inserting an audio signal into a communication channel between a first user equipment and a second user equipment is described. The method may comprise the step of receiving an indication of the audio signal from the first user equipment; the step of setting up a second communication channel to the second user equipment; upon confirmation from the second user equipment, the step of setting up a first communication to the first user equipment; the step of linking the first and second communication channel to provide a communication channel between the first user equipment and the second user equipment; and the step of inserting the audio signal into the communication channel between the first user equipment and the second user equipment. The same audio signal may be inserted into communications originating from the first user equipment for a predefined number of set up requests from the first user equipment. In an embodiment, the audio signal is inserted only once.

The step of receiving an indication of the audio signal may comprise the step of receiving a short message service, i.e. an SMS, from the first user equipment comprising the indication of the audio signal. The SMS may comprise an instruction to insert the indicated audio signal into future communications originating from the first user equipment. In response to the SMS, a reply message may be sent to the first user equipment confirming receipt of the indication and/or confirming receipt of the instruction to insert the indicated audio signal into future communications. In a similar manner, the method may comprise the step of receiving a message from the first user equipment indicating that the audio signal should not be inserted for a future set up request from the first user equipment. In other words, a message from the first user equipment may be received, wherein the received message ensures that the audio signal will not be inserted into future communications originating from or requested by the first user equipment.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Fig. 1 illustrates an example network configured to provide the services described in the present document;
Fig. 2 shows a flow chart of an example audio insertion service;
Fig. 3 shows a flow chart of an example setup procedure of an audio insertion service; and
Figs. 4a and 4b illustrate different example use cases of the described audio insertion service.

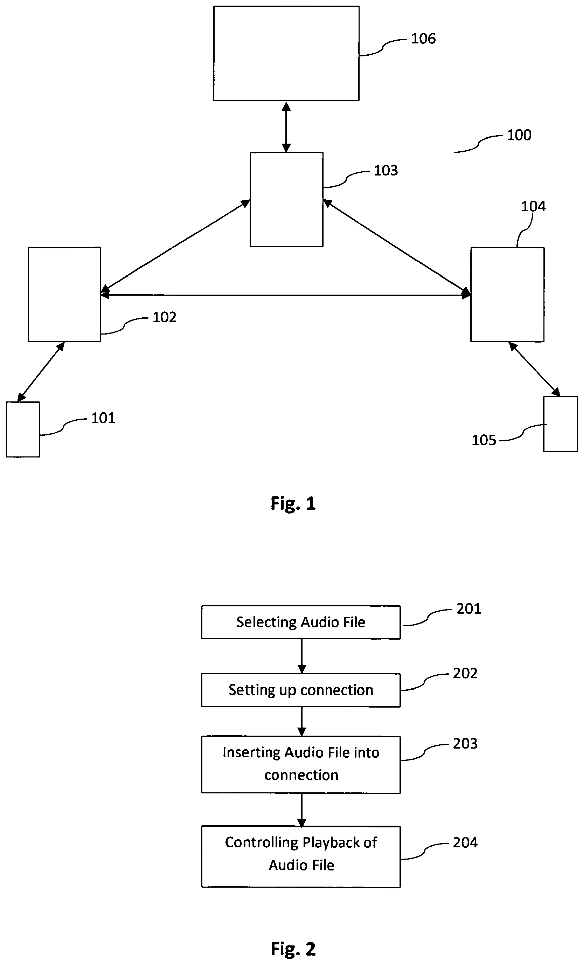

Fig. 1 illustrates a network 100 which implements the audio insertion service described in the present document. A first user equipment 101 (e.g. a mobile telephone or a smart phone) is connected through an access network (e.g. a wireless access network comprising a base station and a base station controller) to a first servicing network node 102 (e.g. a mobile switching center MSC) of the network 100. In a similar manner, a second user equipment 105 (e.g. a mobile telephone or a smart phone) is connected via an access network to a second servicing node 104. Furthermore, the network 100 comprises a gateway node 103 which provides an interface to a media server 106.

The media server 106 may be configured to manage the call control and media content delivery throughout end-to-end establishment between the first and second user equipment 101, 105. In other words, the media server 106 may manage the insertion of an audio signal into the bearer channel between the first and second user equipment 101, 105.

By way of example, an audio signal (e.g. music) may be inserted into a communication between the first user equipment 101 and the second user equipment 105 in the following way:
1. The first user equipment 101 transmits the telephone number of the second user equipment 105 (i.e. of the called party) via the access network to the first servicing node 102 of the first user equipment 101.
2. The first servicing node 102 determines the location of the second user equipment 105 within the network 100. This could be performed by contacting the Home Location Register (HLR) of the second user equipment 105 (e.g. via SS7 signaling). Furthermore, the first servicing node 102 queries the network 100, e.g. via the HLR of the first user equipment 101, for services subscribed by the first user equipment 101. If it is determined that the first user equipment 101 has subscribed value added services (e.g. the audio insertion service outlined in the present document), the call is forwarded to the gateway node 103.
3. The gateway node 103 may query the HLR of the first user equipment 101 in order to obtain subscriber information regarding the first user equipment 101. If the gateway node 103 detects that the first user equipment 101 has subscribed value added services such as the audio insertion service, the gateway node 103 forwards the call to the media server 106.
4. The media server 106 receives the call and establishes a forward path to the second user equipment 105 via the servicing node 104 and the access network and alerts the second user equipment 105 of an incoming call.
5. The second user equipment 105 answers the call and a notification is sent to the media server 106 via the access network, the second servicing node 104 and the gateway node 103.
6. The media server 106 sets up a reverse path to the first user equipment 101 via the gateway node 103, the first servicing node 102 and the access network, thereby establishing a communication channel between the first and second user equipments 101, 105.
7. Furthermore, the media server 106 inserts a predetermined audio signal into the communication channel, thereby providing the audio signal to the first and the second user equipment 101, 105. In addition, the media server 106 may trigger the generation of a billing data record which may be used for the subsequent billing to the user of the first user equipment 101.
8. The media server 106 may be configured to receive control signals from the first and/or second user equipments 101, 105 with regards to the rendering of the audio signal. As such, the first and/or second user equipments 101, 105 may send control signals with regards to the volume or the starting / pausing / stopping of the playback of the audio signal. If the media server 106 is participating in the communication between the first and second user equipments 101, 105, the control signals may be transmitted from the first and second user equipments 101, 105 via inband signaling, e.g. via DTMF signaling. It should be noted that the media server 106 may be configured to allow for an independent control of the audio playback of the first and second user equipment 101, 105. This means that the playback of the audio signal to the first user equipment 101 may be controlled independently from the playback of the audio signal to the second user equipment 105. As such, each user may control the volume and the starting / pausing / stopping of the audio signal played back to him or herself. In other words, the insertion of the audio signal may be controlled independently on the forward path to the second user equipment 105 from the reverse path to the first user equipment 101.

As outlined above, the network 100 comprising the media server 106 may be used to insert predetermined audio signals (e.g. background music) into a telephone communication. The predetermined audio signals may be selected by the user of the first user equipment 101 prior to the telephone communication. For this purpose, an operator of the network 100 or an operator of the service provided by the media server 106 may provide various user interface, e.g. a web interface, an interactive voice response (IVR) interface or an SMS (short message service) interface.

An example of the audio insertion service is outlined in Fig. 2. A user of the first user equipment 101 selects an audio signal (e.g. a particular song) from a database of available audio files provided by a service operator (step 201). As a result of this selection process, the selected audio signal is stored as the predetermined audio signal of the first user equipment 101 in the network 100. The information regarding the predetermined audio signal may be stored on the media server 106 and an indication on the fact that the first user equipment 101 has subscribed to the audio insertion service may be stored at the HLR of the first user equipment 101. Alternatively, a code indicating the predetermined audio signal may be stored at the HLR of the first user equipment 101 and provided to the media server 106 upon request.

Subsequent to the selection of an audio signal, the user of the first user equipment 101 may set up a call to the second user equipment 105 (step 202). Alternatively, the user of the first user equipment 101 may call up an operator of the media server 106 and request the operator of the media server 106 to set up the call with the second user equipment 105, on behalf of the first user equipment 101. As such, the media server 106 may be configured to set up a connection between the first and the second user equipments 101, 105.

Upon establishment of the communication channel between the first and second user equipments 101, 105, the media server 106 inserts the predetermined audio signal into the communication channel between the first and second user equipments 101, 105. As outlined above, this may be achieved by establishing a three way connection between the first user equipment 101, the second user equipment 105 and the media server 106.

The playback of the audio signal may be controlled by the first and/or second user equipment 101, 105 (step 204). In an embodiment, the control is performed via inband signaling from the first and/or second user equipment 101, 105 to the media server 106. By way of example, pressing a key sequence such as "#0#" on the keypad of the first user equipment 101 may stop the playback of the audio signal. As indicated above, the control of the playback may be independent or joint for the first and second user equipments 101, 105.

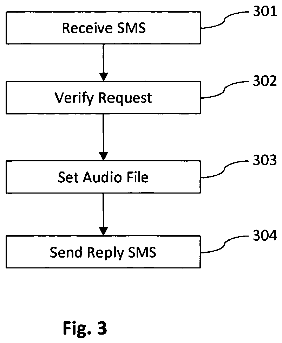

Fig. 3 shows an example selection method of an audio signal using SMS. The user of the first user equipment 101 sends an SMS to a predefined number of the operator of the audio insertion service, e.g. 3434. The SMS from the user may indicate a code for the audio insertion service. Alternatively, the predefined number may be a dedicated number of the audio insertion service. Furthermore, the SMS may comprise an indication of the selected audio signal (e.g. the song "Frank Sinatra, Fly me to the moon"). The indication of the selected audio signal may be provided by a codeword of the selected audio signal (e.g. a codeword published by the operator of the audio insertion service on his web site). Alternatively, the indication of the selected audio signal may be provided as a text string. In such case, the operator may use text string comparison, in order to identify an appropriate audio signal corresponding to the test string comprised within the SMS.

The SMS is received by the operator of the audio insertion service (step 301). Subsequently, the operator verifies the request comprised within the SMS (step 302). The verification may comprise the verification if the user of the first user equipment 101 is authorized to use the audio insertion service. Furthermore, the verification may comprise the verification if the selected audio signal is available in the database. If the verification is passed, the selected audio file is set within the network 100 and the audio insertion service is enabled (step 303). The setting may comprise the setting of an appropriate indication within the HLR of the first user equipment 101 and/or the media server 106.

Finally, the operator sends a reply SMS to the first user equipment (step 304) informing the user that his service has been registered (e.g. a message stating "Your request has been approved. Enjoy your song! Fly me to the moon."). After setting of the audio signal (step 303) or after having sent the reply SMS (step 304), the audio insertion service is enabled. When a user of the first user equipment 101 calls the second user equipment 105, the song "Fly me to the moon" will be played to the first and the second user equipment 101, 105. The audio signal may be played back for a predetermined time (e.g. 30 seconds) and then stop automatically. The play back may be controlled by the first and/or second user equipment 101, 105 as outlined above. As such, the play back may be interrupted and/or resumed. Furthermore, the volume of the play back may be adjusted in accordance to the preferences of the users of the first and/or second user equipment 101, 105.

Moreover, user A may send an SMS (step 301) to the operator including a mobile number of a party to be called. The operator may set up the service as outlined above and call that mobile number written in the SMS and play the selected audio file. Furthermore, if user A defines a time and date within the SMS (step 301), operator will call that number in the SMS at the predefined time and date and plays the selected audio file. It should be noted that user A may write his/her own phone number or the phone number of another user. In the first case, user A would be called up by the operator and receive the selected audio file.

The audio insertion service may be valid for a predetermined number of calls (e.g. for only one call). As such, the user would not need to terminate the service. Alternatively, the audio insertion service may be activated and deactivated by explicit SMS messages of the user of the first user equipment 101. By way of example, the user may send a blank SMS to the predefined number in order to clear and terminate the requested audio insertion service.

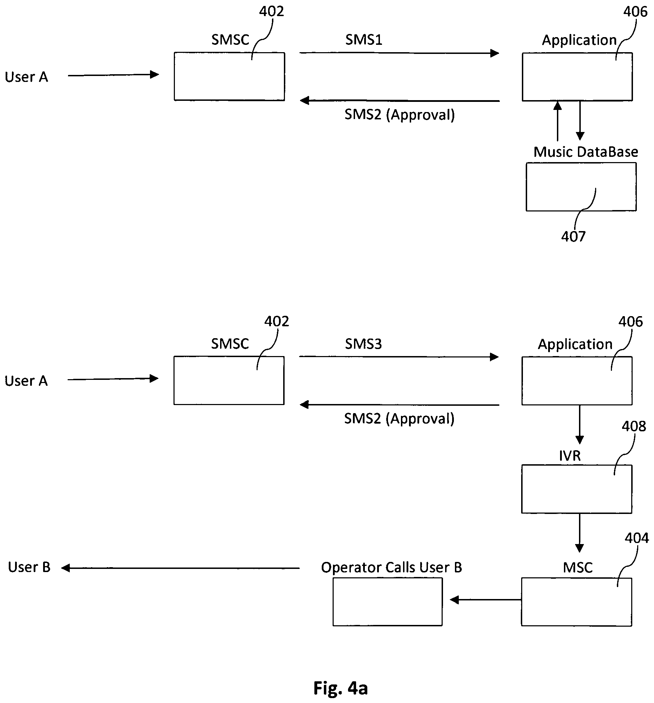

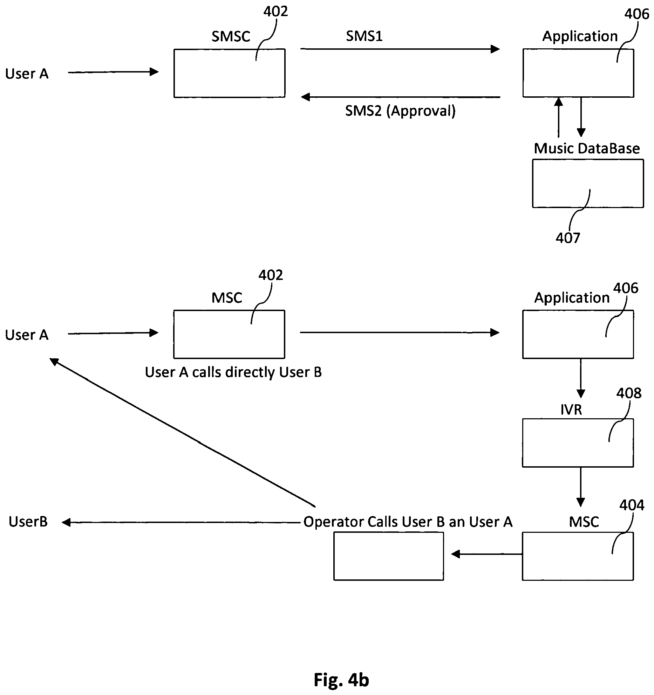

In Figs. 4a and 4b various use cases of the audio insertion service are described. User A may send an SMS to the media server 106, 406 which hosts the audio insertion application. The SMS is typically sent via a short message service center (SMSC) 402. As outlined above, user A may receive an approval SMS from the media server 106, 406. The media server 106, 406 may enable and set up the service by accessing an audio database 407, wherein the audio database 407 comprises the available audio files.

Subsequent to setting up the service (or in parallel), user A may instruct the media server 106, 406 to have the audio file played to a user B. In this context, the media server 106, 406 may make use of an IVR (interactive voice response) platform 408, e.g. in order to inform user B that an audio file is going to be rendered on behalf of user A. The audio file is provided to user B via a servicing node 104, 404 (e.g. an MSC).

Fig. 4b illustrates another use case, where user A calls user B in order to trigger the audio insertion service. The network 100 may forward the outgoing call of user A to the media server 106, 406 as outlined above. The media server 106, 406 may then initiate the setup of a communication channel to user A, as well as to user B, and render the audio file to both users. For this purpose, the media server 106, 406 may make use of an IVR platform 408, e.g. in order to announce the upcoming rendering of the audio file. Furthermore, the IVR platform 408 may be used to enable the control of the rendering. In other words, by use of an IVR platform 408, a user may be enabled to control the rendering (e.g. the volume, start, stop, etc.) of the audio file.

In the present document, a method and system for providing an audio insertion service has been described. The described audio insertion service may be used to enable a user to select an appropriate audio signal (e.g. music) in a timely manner and to insert the selected audio signal into a communication with a second user.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A media server (106) for a telecommunication network (100), wherein the media server (106) is adapted to
- provide a predetermined audio signal;
- set up a second communication channel to a second user equipment (105);
- upon confirmation from the second user equipment, set up a first communication to a first user equipment (101);
- link the first and second communication channel to provide a communication channel between the first user equipment (101) and the second user equipment (105);
- insert the predetermined audio signal into the communication channel between the first user equipment (101) and the second user equipment (105); and
- modify the rendering of the audio signal independently on the first communication channel to the first user equipment (101) and on the second communication channel to the second user equipment (105) subject to control signals received from the first and second user equipment (101, 105), respectively.

2. The media server (106) of claim 1, further adapted to
- receive a request for setting up the communication channel to the second user equipment (105) from the first user equipment (101) prior to setting up the second communication channel.

3. The media server (106) according to any previous claim, further adapted to
- detect that the first user equipment (101) has requested the insertion of the predetermined audio signal into the communication channel between the first user equipment (101) and the second user equipment (105).

4. The media server (106) of claim 3, wherein the detecting comprises
- sending a request to a home location register of the first user equipment (101); and
- receiving a response indicating that the first user equipment (101) has requested the insertion of the predetermined audio signal.

5. The media server (106) of any previous claim, further adapted to
- receive a control signal from the first user equipment (101) and/or the second user equipment (105), wherein the control signal is directed at controlling the rendering of the audio signal to the first and/or second user equipment (101, 105); and
- modify the rendering of the audio signal to the first and/or second user equipment (101, 105) in accordance to the control signal.

6. The media server (106) of claim 5, wherein the control signal is an inband signal of the communication channel.

7. The media server (106) of any of claims 5 to 6, wherein the modifying of the rendering of the audio signal comprises one or more of: modifying a playback volume of the audio signal, pausing a playback of the audio signal, stopping a playback of the audio signal, resuming a playback of the audio signal, muting a playback of the audio signal.

8. The media server (106) of any previous claim, wherein the predetermined audio signal is inserted into the communication channel between the first user equipment (101) and the second user equipment (105) in addition to audio data exchanged between the first and second user equipment (101, 105).

9. The media server (106) of any previous claim, wherein the first and second user equipments (101, 105) are any one of: wireless mobile telephones or smart phones.

10. A method for inserting an audio signal into a communication channel between a first user equipment (101) and a second user equipment (105), the method comprising
- receiving an indication of the audio signal from the first user equipment (101);
- setting up a second communication channel to the second user equipment (105);
- upon confirmation from the second user equipment, setting up a first communication to the first user equipment (101);
- linking the first and second communication channel to provide a communication channel between the first user equipment (101) and the second user equipment (105);
- inserting the audio signal into the communication channel between the first user equipment (101) and the second user equipment (105); and
- modifying the rendering of the audio signal independently on the first communication channel to the first user equipment (101) and on the second communication channel to the second user equipment (105) subject to control signals received from the first and second user equipment (101, 105), respectively.

11. The method of claim 10, wherein receiving an indication of the audio signal comprises:
- receiving a short message service from the first user equipment (101) comprising the indication of the audio signal; and
- sending a reply message to the first user equipment (101) confirming receipt of the indication.

12. The method of any of claims 10 to 11, further comprising:
- receiving a request for setting up the communication channel to the second user equipment (105) from the first user equipment (101) prior to setting up the second communication channel.

13. The method of claim 12, wherein the same audio signal is inserted for a predefined number of set up requests from the first user equipment (101).

14. The method of any of claims 12 to 13, further comprising
- receiving a message from the first user equipment (101) indicating that the audio signal should not be inserted for a future set up request from the first user equipment (101).

## Patentansprüche

1. Medienserver (106) für ein Telekommunikationsnetzwerk (100), wobei der Medienserver (106) angepasst ist zum
- Bereitstellen eines vorausbestimmten Audiosignals;
- Einrichten eines zweiten Kommunikationskanals zu einem zweiten Teilnehmergerät (105);
- nach Bestätigung von dem zweiten Teilnehmergerät, Einrichten einer ersten Kommunikation zu einem ersten Teilnehmergerät (101);
- Verbinden des ersten und zweiten Kommunikationskanals, um einen Kommunikationskanal zwischen dem ersten Teilnehmergerät (101) und dem zweiten Teilnehmergerät (105) bereitzustellen;
- Einfügen des vorausbestimmten Audiosignals in den Kommunikationskanal zwischen dem ersten Teilnehmergerät (101) und dem zweiten Teilnehmergerät (105); und
- Ändern der Wiedergabe des Audiosignals unabhängig auf dem ersten Kommunikationskanal zum ersten Teilnehmergerät (101) und auf dem zweiten Kommunikationskanal zum zweiten Teilnehmergerät (105) in Abhängigkeit von Steuersignalen, die jeweils vom ersten und zweiten Teilnehmergerät (101, 105) empfangen werden.

2. Medienserver (106) nach Anspruch 1, weiterhin angepasst zum
- Empfangen einer Anfrage für die Einrichtung des Kommunikationskanals zum zweiten Teilnehmergerät (105) von dem ersten Teilnehmergerät (101) vor der Einrichtung des zweiten Kommunikationskanals.

3. Medienserver (106) nach einem beliebigen vorstehenden Anspruch, weiterhin angepasst zum
- Feststellen, dass das erste Teilnehmergerät (101) die Einfügung des vorausbestimmten Audiosignals in den Kommunikationskanal zwischen dem ersten Teilnehmergerät (101) und dem zweiten Teilnehmergerät (105) angefordert hat.

4. Medienserver (106) nach Anspruch 3, wobei das Feststellen Folgendes umfasst:
- Senden einer Anfrage an ein Heimatsortregister des ersten Teilnehmergeräts (101); und
- Empfangen einer Antwort, die angibt, dass das erste Teilnehmergerät (101) die Einfügung des vorausbestimmten Audiosignals angefordert hat.

5. Medienserver (106) nach einem beliebigen vorstehenden Anspruch, weiterhin angepasst zum
- Empfangen eines Steuersignals von dem ersten Teilnehmergerät (101) und/oder dem zweiten Teilnehmergerät (105), wobei das Steuersignal zum Steuern der Wiedergabe des Audiosignals an das erste und/oder zweite Teilnehmergerät (101, 105) ausgerichtet ist; und
- Ändern der Wiedergabe des Audiosignals an das erste und/oder zweite Teilnehmergerät (101, 105) in Übereinstimmung mit dem Steuersignal.

6. Medienserver (106) nach Anspruch 5, wobei das Steuersignal ein In-Band-Signal des Kommunikationskanals ist.

7. Medienserver (106) nach einem beliebigen der Ansprüche 5 bis 6, wobei das Ändern der Wiedergabe des Audiosignals eines oder mehrere aus Folgendem umfasst: Ändern einer Wiedergabelautstärke des Audiosignals, Unterbrechen einer Wiedergabe des Audiosignals, Anhalten einer Wiedergabe des Audiosignals, Fortsetzen einer Wiedergabe des Audiosignals, Stummschalten einer Wiedergabe des Audiosignals.

8. Medienserver (106) nach einem beliebigen vorstehenden Anspruch, wobei das vorausbestimmte Audiosignal in den Kommunikationskanal zwischen dem ersten Teilnehmergerät (101) und dem zweiten Teilnehmergerät (105) eingefügt wird, zusätzlich zu Audiodaten, die zwischen dem ersten und zweiten Teilnehmergerät (101, 105) ausgetauscht werden.

9. Medienserver (106) nach einem beliebigen vorstehenden Anspruch, wobei das erste und zweite Teilnehmergerät (101, 105) beliebige aus Folgendem sind: drahtlose Mobiltelefone oder Smartphones.

10. Verfahren zum Einfügen eines Audiosignals in einen Kommunikationskanal zwischen einem ersten Teilnehmergerät (101) und einem zweiten Teilnehmergerät (105), wobei das Verfahren Folgendes umfasst:
- Empfangen einer Angabe des Audiosignals von dem ersten Teilnehmergerät (101);
- Einrichten eines zweiten Kommunikationskanals zu dem zweiten Teilnehmergerät (105);
- nach Bestätigung von dem zweiten Teilnehmergerät, Einrichten einer ersten Kommunikation zu dem ersten Teilnehmergerät (101);
- Verbinden des ersten und zweiten Kommunikationskanals, um einen Kommunikationskanal zwischen dem ersten Teilnehmergerät (101) und dem zweiten Teilnehmergerät (105) bereitzustellen;
- Einfügen des Audiosignals in den Kommunikationskanal zwischen dem ersten Teilnehmergerät (101) und dem zweiten Teilnehmergerät (105); und
- Ändern der Wiedergabe des Audiosignals unabhängig auf dem ersten Kommunikationskanal zum ersten Teilnehmergerät (101) und auf dem zweiten Kommunikationskanal zum zweiten Teilnehmergerät (105) in Abhängigkeit von Steuersignalen, die jeweils vom ersten und zweiten Teilnehmergerät (101, 105) empfangen werden.

11. Verfahren nach Anspruch 10, wobei das Empfangen einer Angabe des Audiosignals Folgendes umfasst:
- Empfangen eines Kurzmitteilungsdienstes von dem ersten Teilnehmergerät (101), umfassend die Angabe des Audiosignals; und
- Senden einer Antwortnachricht an das erste Teilnehmergerät (101), die den Empfang der Angabe bestätigt.

12. Verfahren nach einem beliebigen der Ansprüche 10 bis 11, weiterhin umfassend:
- Empfangen einer Anfrage für die Einrichtung des Kommunikationskanals zum zweiten Teilnehmergerät (105) von dem ersten Teilnehmergerät (101) vor der Einrichtung des zweiten Kommunikationskanals.

13. Verfahren nach Anspruch 12, wobei das gleiche Audiosignal für eine vorausdefinierte Anzahl von Einrichtungsanfragen von dem ersten Teilnehmergerät (101) eingefügt wird.

14. Verfahren nach einem beliebigen der Ansprüche 12 bis 13, weiterhin umfassend:
- Empfangen einer Nachricht von dem ersten Teilnehmergerät (101), die angibt, dass das Audiosignal für eine zukünftige Einrichtungsanfrage von dem ersten Teilnehmergerät (101) nicht eingefügt werden soll.

## Revendications

1. Serveur média (106) pour un réseau de télécommunication (100), le serveur média (106) étant adapté pour
- fournir un signal audio prédéterminé ;
- établir un second canal de communication vers un second équipement d'utilisateur (105) ;
- lors d'une confirmation en provenance du second équipement d'utilisateur, établir une première communication vers un premier équipement d'utilisateur (101) ;
- relier le premier et le second canal de communication pour fournir un canal de communication entre le premier équipement d'utilisateur (101) et le second équipement d'utilisateur (105) ;
- insérer le signal audio prédéterminé dans le canal de communication entre le premier équipement d'utilisateur (101) et le second équipement d'utilisateur (105) ; et
- modifier le rendu du signal audio indépendamment sur le premier canal de communication vers le premier équipement d'utilisateur (101) et sur le second canal de communication vers le second équipement d'utilisateur (105) soumis à des signaux de commande reçus en provenance du premier et du second équipement d'utilisateur (101, 105), respectivement.

2. Serveur média (106) selon la revendication 1, en outre adapté pour
- recevoir une demande pour établir le canal de communication vers le second équipement d'utilisateur (105) en provenance du premier équipement d'utilisateur (101) avant l'établissement du second canal de communication.

3. Serveur média (106) selon l'une quelconque des revendications précédentes, en outre adapté pour
- détecter que le premier équipement d'utilisateur (101) a demandé l'insertion du signal audio prédéterminé dans le canal de communication entre le premier équipement d'utilisateur (101) et le second équipement d'utilisateur (105).

4. Serveur média (106) selon la revendication 3, dans lequel la détection comprend les étapes suivantes
- envoyer une demande à un enregistreur de localisation nominal du premier équipement d'utilisateur (101) ; et
- recevoir une réponse indiquant que le premier équipement d'utilisateur (101) a demandé l'insertion du signal audio prédéterminé.

5. Serveur média (106) selon l'une quelconque des revendications précédentes, en outre adapté pour
- recevoir un signal de commande en provenance du premier équipement d'utilisateur (101) et/ou du second équipement d'utilisateur (105), le signal de commande étant destiné à la commande du rendu du signal audio vers le premier et/ou le second équipement d'utilisateur (101, 105) ; et
- modifier le rendu du signal audio vers le premier et/ou le second équipement d'utilisateur (101, 105) conformément au signal de commande.

6. Serveur média (106) selon la revendication 5, dans lequel le signal de commande est un signal intrabande du canal de communication.

7. Serveur média (106) selon l'une quelconque des revendications 5 à 6, dans lequel la modification du rendu du signal audio comprend un ou plusieurs parmi : la modification d'un volume de lecture du signal audio, la mise en pause d'une lecture du signal audio, l'arrêt d'une lecture du signal audio, la reprise d'une lecture d'un signal audio, la mise en sourdine d'une lecture du signal audio.

8. Serveur média (106) selon l'une quelconque des revendications précédentes, dans lequel le signal audio prédéterminé est inséré dans le canal de communication entre le premier équipement d'utilisateur (101) et le second équipement d'utilisateur (105) en plus de données audio échangées entre le premier et le second équipement d'utilisateur (101, 105).

9. Serveur média (106) selon l'une quelconque des revendications précédentes, dans lequel les premier et second équipements d'utilisateur (101, 105) sont l'un quelconque parmi : des téléphones mobiles sans fil ou des téléphones intelligents.

10. Procédé pour insérer un signal audio dans un canal de communication entre un premier équipement d'utilisateur (101) et un second équipement d'utilisateur (105), le procédé comprenant les étapes suivantes
- recevoir une indication du signal audio en provenance du premier équipement d'utilisateur (101) ;
- établir un second canal de communication vers le second équipement d'utilisateur (105) ;
- lors d'une confirmation en provenance du second équipement d'utilisateur, établir une première communication vers le premier équipement d'utilisateur (101) ;
- relier le premier et le second canal de communication pour fournir un canal de communication entre le premier équipement d'utilisateur (101) et le second équipement d'utilisateur (105) ;
- insérer le signal audio dans le canal de communication entre le premier équipement d'utilisateur (101) et le second équipement d'utilisateur (105) ; et
- modifier le rendu du signal audio indépendamment sur le premier canal de communication vers le premier équipement d'utilisateur (101) et sur le second canal de communication vers le second équipement d'utilisateur (105) soumis à des signaux de commande reçus en provenance du premier et du second équipement d'utilisateur (101, 105), respectivement.

11. Procédé selon la revendication 10, dans lequel la réception d'une indication du signal audio comprend les étapes suivantes :
- recevoir un service de message court en provenance du premier équipement d'utilisateur (101) comprenant l'indication du signal audio ; et
- envoyer un message de réponse au premier équipement d'utilisateur (101) confirmant la réception de l'indication.

12. Procédé selon l'une quelconque des revendications 10 à 11, comprenant en outre l'étape suivante :
- recevoir une demande pour établir le canal de communication vers le second équipement d'utilisateur (105) en provenance du premier équipement d'utilisateur (101) avant d'établir le second canal de communication.

13. Procédé selon la revendication 12, dans lequel le même signal audio est inséré pour un nombre prédéfini de demandes d'établissement en provenance du premier équipement d'utilisateur (101).

14. Procédé selon l'une quelconque des revendications 12 à 13, comprenant en outre l'étape suivante
- recevoir un message en provenance du premier équipement d'utilisateur (101) indiquant que le signal audio ne devait pas être inséré pour une future demande d'établissement en provenance du premier équipement d'utilisateur (101).
